# EUROPÄISCHE PATENTSCHRIFT

(11) **EP 0 218 149 B1**
(45) Veröffentlichungstag und Bekanntmachung des Hinweises auf die Patenterteilung: **10.02.1993**
(21) Anmeldenummer: 86113215.7
(22) Anmeldetag: 25.09.1986
(51) Int. Cl.: H04M 3/56

(54) **Einrichtung und Verfahren zur Durchführung von Telefongesprächen zwischen drei und mehr Teilnehmerstellen**
Device and method for realizing telephone conversations between three and more subscriber sets
Dispositif et méthode pour réaliser des conversations téléphoniques entre trois et plusieurs postes d'abonnés

(30) Priorität: 04.10.1985 DE 3535411
(43) Veröffentlichungstag der Anmeldung: 15.04.1987
(73) Patentinhaber: Neumann Elektronik GmbH, D-45414 Mülheim (DE)
(72) Erfinder: Neumann, Dirk, Dipl.-Ing., D-4330 Mülheim (DE)
(74) Vertreter: Feder, Heinz, Dr.

(56) Entgegenhaltungen:
- EP-A- 0 099 013
- EP-A- 0 155 570
- CH-A- 408 129
- CH-A- 489 161
- GB-A- 1 602 473
- GB-A- 2 139 055

## Beschreibung

Die Erfindung betrifft eine Einrichtung zur Durchführung von Telefongesprächen zwischen drei und mehr Teilnehmerstellen, bei der jede Teilnehmerstelle über eine Fernsprechleitung an den bidirektionalen Hauptzweig einer Gabelschaltung anschließbar ist, die an ihrer dem Hauptzweig gegenüberliegenden Seite mit einem Nachbildungsnetzwerk abgeschlossen ist, wobei der Ausgangszweig jeder Gabelschaltung über mindestens einen Verstärker und einen Niederfrequenzknoten mit den Eingangszweigen der übrigen Gabelschaltungen und der Eingangszweig jeder Gabelschaltung über mindestens einen Verstärker und den Niederfrequenzknoten mit den Ausgangszweigen der übrigen Gabelschaltungen verbunden ist.

Eine derartige Einrichtung ist in CH-A- 408 129 beschrieben und soll den Fernsprechteilnehmern am öffentlichen Fernsprechnetz die Möglichkeit bieten, mit mehreren anderen Teilnehmern gleichzeitig in Verbindung zu treten oder beispielsweise Telefonkonferenzen durchzuführen.

Die der Erfindung zugrunde liegende Aufgabe bestand darin eine Einrichtung der eingangs erwähnten Art zu schaffen, mit der bis zu zehn Fernsprechteilnehmerstellen über das öffentliche Fernsprechnetz gleichzeitig miteinander verbunden sein können, unabhängig von ihrer Entfernung voneinander und von der Anzahl der Teilnehmer. Dabei sollte erreicht werden, daß der jeweils zu einem bestimmten Zeitpunkt sprechende Teilnehmer, der im Folgenden als "aktiver Teilnehmer" bezeichnet wird, von sämtlichen anderen Teilnehmern, die im Folgenden als "passive Teilnehmer" bezeichnet werden, gleich gut verstanden wird, und die passiven Teilnehmer sich gegenseitig, wenigstens in etwas gedämpfter Lautstärke, hören. Die Verbindung sollte durch einen Wechsel zu einem anderen aktiven Teilnehmer sowie durch Änderungen in der Anzahl oder in der Zusammensetzung der Teilnehmer nicht beeinträchtigt werden.

Ein bei einer derartigen Einrichtung zu lösendes Problem besteht darin, daß einerseits ein hoher Verstärkungsgrad in der Einrichtung erreicht werden sollte, insbesondere an den Verstärkern, die jeweils einen aktiven Teilnehmer zugeordnet sind, andererseits muß dafür Sorge getragen werden, daß bei einem derart komplizierten, mehrere Teilnehmer verknüpfenden System keine Rückkopplungsschwingungen einsetzen. Dies bedeutet, daß die aktiven und passiven Sprechrichtungen sehr gut entkoppelt sein müssen.

Bei der bekannten Einrichtung wird eine Rückwärtsübertragung über das Koppelnetzwerk des Niederfrequenzknotens dadurch verhindert, daß die Eingangs- und Ausgangsimpedanzen der Verstärker klein gegenüber den Koppelwiderständen gemacht werden. Eine Anpassung der Gabelschaltungen, insbesondere in Abhängigkeit von der wechselnden Anzahl der Teilnehmer, ist nicht vorgesehen.

Da bei der Einrichtung von Gabelschaltungen Gebrauch gemacht wird, geht die Erfindung davon aus, daß es erforderlich ist, diese Gabelschaltungen in optimaler Weise an die zu den einzelnen Teilnehmerstellen führenden Fernsprechleitungen anzupassen, wobei die besondere Schwierigkeit zu überwinden ist, daß sich die Impedanz dieser Fernsprechleitungen mit dem Wechsel der Teilnehmer ständig ändern kann.

Bezüglich der optimalen Anpassung einer Gabelschaltung an eine Fernsprechleitung macht die Erfindung Gebrauch von einem Stand der Technik, wie er beispielsweise in der GB-A- 2 139 055 beschrieben ist. In dieser Druckschrift ist ein automatisches Telefon-Konferenzsystem beschrieben, bei dem eine Teilnehmerstelle über eine Gabelschaltung mit einer anderen Teilnehmerstelle verbunden wird, die ein Mikrofon und einen Lautsprecher aufweist und beispielsweise in einem Konferenzraum angeordnet sein kann, so daß über das Mikrofon und den Lautsprecher mehrere Konferenzteilnehmer mit der anderen Teilnehmerstelle in Verbindung treten können. Die Durchführung von Telefongesprächen zwischen drei oder mehr Teilnehmerstellen ist in diesem System nicht vorgesehen. Bei diesem bekannten System ist die eine Gabelschaltung an ihrer dem Hauptzweig gegenüberliegenden Seite mit einem Nachbildungsnetzwerk abgeschlossen, das variable ansteuerbare Impedanzen enthält. Zur Anpassung wird in den Eingangszweig der Gabelschaltung ein Niederfrequenz-Prüfsignal gegeben und es wird der in den Ausgangszweig der Gabelschaltung übertretende Signalpegel gemessen. Mittels einer Steuervorrichtung wird aufgrund der fortlaufenden Messung des in Abhängigkeit von der Gabelübergangsdämpfung aus dem Eingangszweig der Gabelschaltung in den Ausgangszweig übertretenden Anteils des Prüfsignalpegels bei einer Variation der ansteuerbaren Impedanzen des Nachbildungsnetzwerkes und Steuerung dieser Impedanzen auf einen Wert, der dein kleinsten gemessenen Wert des übergetretenen Anteils des Prüfsignalpegels entspricht, die Gabelschaltung optimal angepaßt. Es ist weiterhin bei diesem System möglich, Echos dadurch zu unterdrücken, daß in Abhängigkeit von der Gabelübergangsdämpfung in den Eingangszweig der Gabelschaltung ein variabler Dämpfer eingeschaltet wird.

Bezüglich der Steuerung des Verstärkungsgrades von in einer Gabelverstärkerschaltung angeordneten steuerbaren Verstärkern wird bei der vorliegenden Erfindung Gebrauch gemacht von einem Stand der Technik, wie er beispielsweise aus der EP-A-00 99 013 hervorgeht.

Die Lösung der oben angegebenen Aufgabe geschieht erfindungsgemäß mit den Merkmalen aus dem kennzeichnenden Teil des Patentanspruches 1.

Vorteilhafte Ausführungsformen der erfindungsgemäßen Einrichtung sind in den Unteransprüchen beschrieben.

Weitere Ansprüche richten sich auf ein Verfahren zur Durchführung von Telefongesprächen zwischen drei und mehr Teilnehmerstellen mittels einer Einrichtung nach der Erfindung sowie auf ein Verfahren zur automatischen Selbstüberprüfung der erfindungsgemäßen Einrichtung.

Wie weiter unten anhand eines Ausführungsbeispieles genauer erläutert, können mit der erfindungsgemäßen Einrichtung mehrere Fernsprechteilnehmer zur gleichen Zeit miteinander verbunden werden, wobei zur Wahrung einer gewissen Gesprächsdisziplin die Einrichtung von der Steuervorrichtung her elektronisch geregelt ist derart, daß jeweils ein Teilnehmer als aktiver Teilnehmer erkannt wird. Der Verstärkungsgrad der steuerbaren Verstärker wird dann so gesteuert, daß der aktive Teilnehmer gegenüber den passiven Teilnehmern eine höhere Verstärkung erhält. Die Verstärkungsgrade der den passiven Teilnehmern zugeordneten Verstärker werden in Abhängigkeit von den Eingangspegeln gesteuert, wobei durch die optimale Anpassung sämtlicher Gabelschaltungen an die mit ihnen verbundenen Fernsprechleitungen hohe Verstärkungsgrade erzielt werden können, ohne daß Rückkopplungsschwingungen einsetzen.

Der Wechsel von einem aktiven Teilnehmer zu einem anderen aktiven Teilnehmer kann durch die Steuervorrichtung derart vorgenommen werden, daß beim Auftreten einer vorgegebenen Sprachpause des vorherigen aktiven Teilnehmers eine Umschaltung auf einen anderen aktiven Teilnehmer in Abhängigkeit vom Vorhandensein eines Sprachsignalpegels erfolgt.

Es besteht ferner die Möglichkeit, einen Teilnehmer als Moderator zu bestimmen, der die Möglichkeit besitzt, Teilnehmer, die nicht zur Gesprächsrunde gehören, von der aktiven Teilnahme an der Einrichtung abzuschalten.

Wegen der vielfältigen Regel- und Steuerbedingungen der erfindungsgemäßen Einrichtung ist es vorteilhaft, wenn die Steuervorrichtung einen Mikrocomputer aufweist, der das ganze System verwaltet. Es können aber auch fest verdrahtete Steuervorrichtungen verwendet werden.

Weiterhin ist es möglich, die Steuervorrichtung so auszulegen, daß, wenn die Einrichtung durch keinen Teilnehmer belegt ist, alle wichtigen Systemteile automatisch im Selbsttestverfahren überwacht werden. Bei einem auftretenden Fehler in einem Systemteil wird dies nach außen über eine Alarmsignalleitung angezeigt.

Weiterhin kann die erfindungsgemäße Einrichtung auch mit einem Drucker oder einem Terminal verbunden werden. Über eine entsprechende Schnittstelle können beispielsweise Meßdaten, eingestellte Verstärkungswerte und Nachbildungskombinationen sowie Fehlermeldungen ausgegeben werden. Die Ausgabedaten können sinnvoll die Entstörung oder Systemüberprüfung unterstützen.

Im folgenden wird anhand der beigefügten Zeichnungen ein Ausführungsbeispiel für eine Einrichtung nach der Erfindung näher erläutert.

In den Zeichnungen zeigen:
- Fig. 1: in einem schematischen Blockschaltbild eine Einrichtung zur Durchführung von Telefongesprächen zwischen n Teilnehmerstellen;
- Fig. 2: in ausführlicherer Darstellung einen Teil der Einrichtung nach Fig. 1 zum Anschluß einer Teilnehmerstelle an die Einrichtung;
- Fig. 3: ein Flußdiagramm zur Durchführung eines Verfahrens zur Durchführung von Telefongesprächen zwischen drei und mehr Teilnehmerstellen mittels einer Einrichtung nach Fig. 1 und 2.

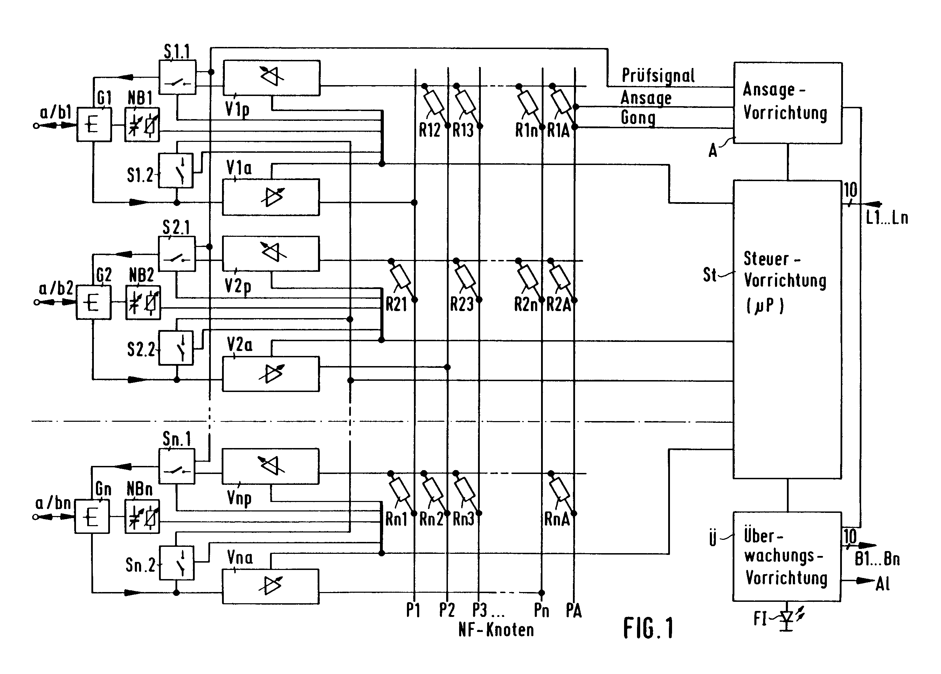

In Fig. 1 ist eine Einrichtung zur Durchführung von Telefongesprächen zwischen bis zu n Teilnehmerstellen dargestellt. Sie weist eine einen Mikrocomputer enthaltende Steuervorrichtung St auf sowie eine Ansagevorrichtung A, mit der ein niederfrequentes Prüfsignal sowie Ansagen und Tonsignale, beispielsweise ein Gong-Signal, erzeugt werden können. Weiterhin ist eine unten näher erläuterte Überwachungsvorrichtung Ü vorhanden, die bei Defekten der Einrichtung Alarmsignale erzeugt und weiterleitet.

Für jede der maximal anschließbaren n Teilnehmerstellen ist eine Gabelverstärkerschaltung vorhanden. Im Folgenden wird die erste dieser Gabelverstärkerschaltungen näher beschrieben, deren Einzelteile mit dem Index 1 bezeichnet sind. Die übrigen, in der gleichen Weise aufgebauten Gabelverstärkerschaltungen tragen die Indizes 2 bis n.

Die Fernsprechleitung a/b1 ist an den bidirektionalen Hauptzweig einer Gabelschaltung G1 angeschlossen, die an der dem Hauptzweig gegenüberliegenden Seite mit einem Nachbildungsnetzwerk NB1 abgeschlossen ist, das variable, ansteuerbare Impedanzen enthält. Dieses Nachbildungsnetzwerk NB1 kann beispielsweise so ausgebildet sein, wie in der älteren DE-OS 34 09 879 beschrieben und kann eine vorgegebene Anzahl von einander parallel geschalteten Ohm'schen Widerständen und Kondensatoren aufweisen, wobei in der Zuleitung zu jedem der Widerstände und jedem der Kondensatoren ein steuerbares Schaltelement angeordnet ist. Durch wechselweises Parallelschalten über die steuerbaren Schaltelemente kann eine große Anzahl von Impedanzwerten erzeugt werden. So können beispielsweise bei vier Widerständen und vier Kondensatoren, die einander parallel geschaltet sind, 256 verschiedene Impedanzwerte eingestellt und zur Optimalisierung der Anpassung der Gabelschaltung G1 an die Fernsprechleitung a/b1 verwendet werden. Das ansteuerbare Nachbildungsnetzwerk NB1 ist über eine Steuerleitung mit der Steuervorrichtung St verbunden.

Im Ausgangszweig der Gabelschaltung G1, durch den die vom Teilnehmer kommenden Sprachsignale der Einrichtung zugeführt werden, ist ein steuerbarer Verstärker V1a angeordnet. Von den übrigen, dem Hauptzweig der Gabelschaltung G1 zugeordneten Vorrichtungen ist in Fig. 1 noch der direkt an den Hauptzweig angeschlossene steuerbare Schalter S1.2 dargestellt, welcher an eine Leitung angeschlossen ist, über die der im Ausgangszweig der Gabelschaltung G1 auftretende Signalpegel direkt der Steuervorrichtung St zur Messung und Verarbeitung zugeführt werden kann.

Es wird darauf hingewiesen, daß, da die Steuervorrichtung einen Mikrocomputer enthält, zur Umsetzung der Analogsignale in digitale Signale und umgekehrt entsprechende Wandler vorgesehen sind, die aber in den Zeichnungen nicht gesondert dargestellt sind.

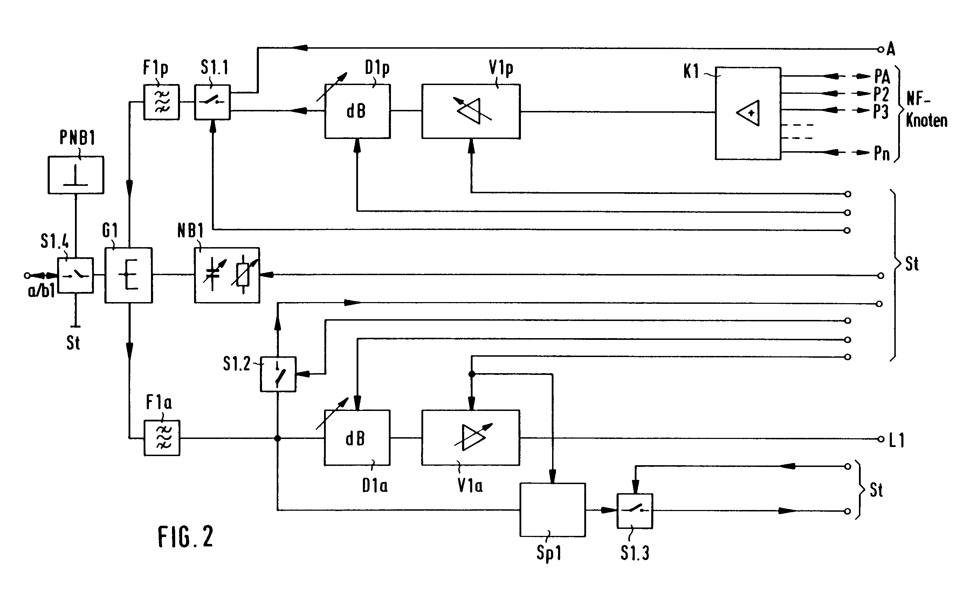

Die übrigen dem Ausgangszweig der Gabelschaltung G1 zugeordneten Vorrichtungen sind Fig. 2 zu entnehmen. So ist dem steuerbaren Verstärker V1a, dessen Verstärkungsgrad von der Steuervorrichtung St her ansteuerbar ist, ein Sprachschalter Sp1 zugeordnet, der von dem im Ausgangszweig der Gabelschaltung G1 herrschenden Sprachsignalpegel angesteuert wird. Der Schaltzustand des Sprachschalters Sp1 kann von der Steuervorrichtung St her über einen Schalter S1.3 abgefragt werden.

Der Sprachschalter Sp1 besitzt zweckmäßig eine sehr kurze Ansprechzeit von 2 bis 3 ms, und seine Empfindlichkeit kann zusammen mit der Einstellung des Verstärkungsgrades am steuerbaren Verstärker V1a eingestellt werden, und zwar in der Weise, daß je höher der eintreffende Sprachsignalpegel ist, umso niedriger sowohl der Verstärkungsgrad des Verstärkers V1a als auch die Ansprechempfindlichkeit des Sprachschalters Sp1 eingestellt werden.

Der Zweck dieser Maßnahme wird weiter unten näher erläutert.

Dem Verstärker V1a ist ein als Verstärker dargestelltes ansteuerbares Dämpfungsglied D1a vorgeschaltet, das ebenfalls von der Steuervorrichtung St her angesteuert wird.

An den Eingangszweig der Gabelschaltung G1, über den die zu den Teilnehmern laufenden Sprachsignale geführt werden, ist über einen von der Steuervorrichtung St her ansteuerbaren Umschalter S1.1 einerseits eine zur Ansagevorrichtung A führende Leitung und andererseits der steuerbare Verstärker V1p angeschlossen.

Von der Ansagevorrichtung A kann dem Eingangszweig der Gabelschaltung G1 eine niederfrequentes Prüfsignal mit konstantem Signalpegel und vorgegebener Dauer zugeführt werden.

Der Verstärkungsgrad des steuerbaren Verstärkers V1p wird von der Steuervorrichtung St her eingestellt, ebenso der Dämpfungsgrad eines dem Verstärker V1p nachgeschalteten steuerbaren Dämpfungsgliedes D1p.

Der Ausgang des Verstärkers V1a im Ausgangszweig der Gabelschaltung G1 sowie der Eingang des Verstärkers V1p im Eingangszweig der Gabelschaltung G1 sind in der aus Fig. 1 und 2 ersichtlichen Weise an einen Niederfrequenzknoten P1 bis Pn, PA angeschlossen. Der Anschluß des Verstärkers V1p im Eingangszweig der Gabelschaltung G1 erfolgt dabei über einen zusätzlichen Summier-Verstärker K1 zur Knoten-Entdämpfung, der die in Fig. 1 dargestellten Entkoppelwiderstände R12 bis R1n, R1A enthält. Wie aus dem Schaltbild ersichtlich, ist beispielsweise der Ausgang des Verstärkers V1a über die Knotenleitung P1 und die entsprechenden Entkoppelwiderstände R21 bis Rn1 mit den Eingängen der Verstärker V2p bis Vnp verbunden, die in den Eingangszweigen der Gabelschaltungen G2 bis Gn liegen. Der Eingang des Verstärkers V1p ist dagegen über die Knotenleitungen P2 bis Pn und die Entkoppelwiderstände R12 bis R1n mit den Ausgängen der Verstärker V2a bis Vna in den Ausgangszweigen der anderen Gabelschaltungen G2 bis Gn verbunden.

Die entsprechenden Verknüpfungsschaltungen zwischen den entsprechenden den Gabelschaltungen G2 bis Gn zugeordneten Verstärkern lassen sich unmittelbar aus Fig. 1 ablesen.

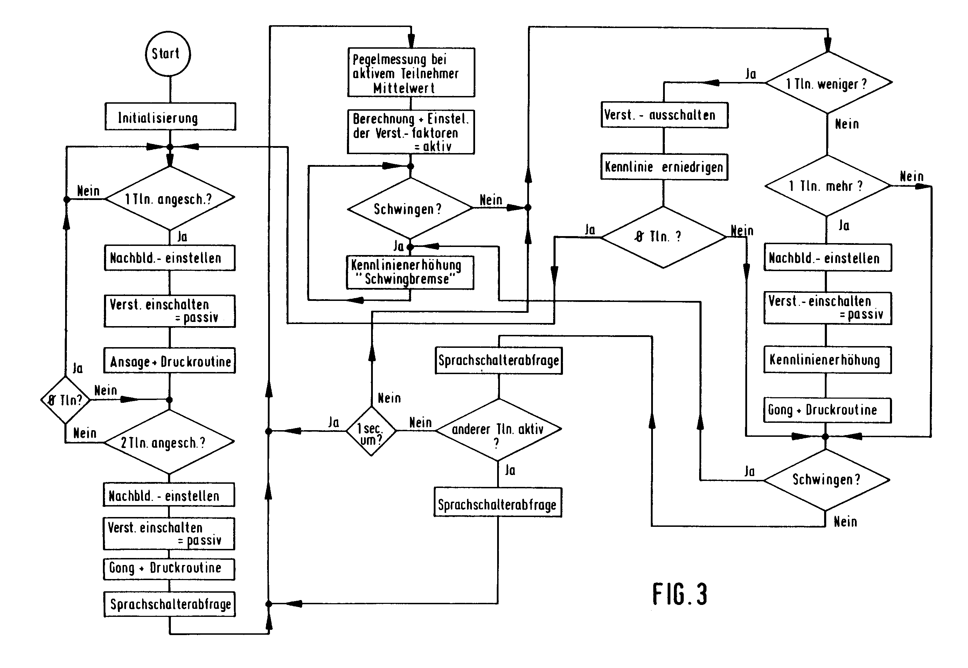

Die Funktionsweise der in Fig. 1 und 2 dargestellten Einrichtung wird im Folgenden beschrieben, wobei auf das unmittelbar aus sich heraus verständlich Flußdiagramm nach Fig. 3 verwiesen wird.

Die Gesprächsteilnehmer erreichen die in den Fig. 1 und 2 dargestellte Einrichtung, indem sie eine bestimmte Telefonnummer wählen, wodurch die zum wählenden Teilnehmer führende Fernsprechleitung a/b1 bis a/bn durch eine Verbindungsschaltung in an sich bekannter und nicht eigens dargestellter Weise mit einer der Gabelschaltungen G1 bis Gn verbunden wird. Die Steuervorrichtung erhält über einen der Eingänge L1 bis Ln jeweils beim Zuschalten eines weiteren Teilnehmers ein Steuersignal, nachdem von der Überwachungsvorrichtung Ü über einen der Ausgänge B1 bis Bn ein das Funktionieren der entsprechenden Verstärkerschaltung anzeigendes Bereitschaftssignal abgegeben wurde.

Nach dem Einschalten der Einrichtung und dem Zuschalten der ersten Teilnehmerstelle sowie beim Zuschalten aller weiteren Teilnehmerstellen wird zunächst die oben beschriebene Anpassung der jeweiligen Gabelschaltung an die Fernsprechleitung durch entsprechende Ansteuerung eines der Nachbildungsnetzwerke NB1 bis NBn vorgenommen. Hierzu wird von der Ansagevorrichtung A ein niederfrequentes Prüfsignal von beispielsweise 800 ms Dauer auf die Eingangszweige der jeweiligen Gabelschaltungen gegeben. Innerhalb dieses Zeitraumes kann die gesamte Anpassung der Gabelschaltung durchgeführt werden. Nach diesem Prüfsignal erhält die erste Teilnehmerstelle, die mit der Einrichtung verbunden wird, von der Ansagevorrichtung A aus eine Ansage, beispielsweise die Ansage: "Sie haben Telefontreff angewählt!"

Weiterhin erhalten bei Zuschaltung einer weiteren Teilnehmerstelle diese und alle anderen Teilnehmerstellen, ebenfalls von der Ansagevorrichtung A aus, beispielsweise ein Gong-Signal, so daß alle Teilnehmer über das Hinzutreten eines weiteren Teilnehmers informiert werden. Während der Ansage und/oder des Gong-Signals sind alle mit den Eingangszweigen der Gabelschaltungen G1 bis Gn verbundenen Verstärker V1p bis Vnp auf den gleichen Verstärkungsgrad eingestellt, so daß alle Teilnehmer diese Signale in gleicher Lautstärke hören.

Prüfsignal, Ansage und Gong-Signal können in der Steuervorrichtung digital gespeichert sein und werden dann in der Ansagevorrichtung A in Analog-Signale verwandelt.

Wenn der zweite Teilnehmer zugeschaltet ist, wird von der Einrichtung festgestellt, welcher Teilnehmer als aktiver Teilnehmer gilt. Hierzu werden die mit den Ausgangszweigen der entsprechenden Gabelschaltungen verbundenen Sprachschalter Sp1 usw. abgefragt, und es wird beim aktiven Teilnehmer eine Pegelmessung vorgenommen. Der im Ausgangszweig der dem sprechenden Teilnehmer zugeordneten Gabelschaltung liegende steuerbare Verstärker wird in der oben angegebenen Weise auf den maximal nötigen und zulässigen Verstärkungsgrad eingestellt. Das Eingangssignal kann in Abhängigkeit vom Sprachsignalpegel, beispielsweise um maximal +19,5dB verstärkt werden. Bei der Hochsteuerung des Verstärkungsgrades wird durch die in der Steuervorrichtung St enthaltene Pegelmeßvorrichtung überwacht, ob Rückkopplungsschwingungen einsetzen. Sobald dies der Fall ist, wird der Verstärkungsgrad um einen vorgegebenen kleinen Betrag zurückgesteuert. Die in Richtung zu den anderen Teilnehmern wirksamen Verstärker werden in Abhängigkeit von den gemessenen Sprachsignalpegeln und den festgestellten Gabelübergangsdämpfungen auf geringere Verstärkungswerte eingestellt.

So kann beispielsweise, wenn dem aktiven Teilnehmer der Verstärker V1a zugeordnet ist, die Verstärkung an diesem Verstärker, falls notwendig, 19dB betragen, während die Verstärkung der in den übrigen Ausgangszweigen der Gabelschaltungen angeordneten Verstärker V1a bis Vna auf 6dB, die Verstärkung an den in den Eingangszweigen der Gabelschaltungen G2 bis Gn angeordneten Verstärker V2p bis Vnp auf 0dB und die Verstärkung am Verstärker V1p auf -12dB eingestellt sein kann.

Es kann nunmehr ein Rundgespräch geführt werden, bei dem der aktive Teilnehmer als Sprechender von allen anderen Teilnehmern gut zu verstehen ist, während sich die übrigen nicht sprechenden, passiven Teilnehmer wenigstens gegenseitig hören, wenn auch mit geringerer Lautstärke. Auf diese Weise wird der Eindruck einer echten Konferenz mit mehreren Teilnehmern aufrechterhalten.

Macht der aktive Teilnehmer eine Sprachpause vorgegebener Länge, beispielsweise von 1 Sek. und ergreift innerhalb dieser Zeit ein anderer Teilnehmer das Wort, so wird er zum aktiven Teilnehmer, indem die Sprachschalter abgefragt, die Sprachpegel erneut gemessen und die Verstärkungsgrade an den Verstärkern neu eingestellt werden. Da, wie aus Fig. 3 zu entnehmen, die Abfrage und Steuerung der Einrichtung laufend durch den Mikrocomputer der Steuervorrichtung St erfolgt, reagiert die Einrichtung außerordentlich rasch und nimmt die entsprechenden Umschaltungen und neuen Ansteuerungen vor. Auch eine Änderung in der Anzahl der Teilnehmer wird sofort erkannt und bei der Ansteuerung der Einrichtung berücksichtigt.

Es ist grundsätzlich möglich, einen der Teilnehmer zum Moderator zu bestimmen, so daß er die Möglichkeit besitzt, einem Teilnehmer das Wort abzuschneiden oder ihn ganz abzuschalten. Hierzu muß dieser Teilnehmer mit einer besonderen, nicht eigens dargestellten, Einrichtung versehen sein, mit der der Steuervorrichtung St ein besonderes Signal zugeführt wird, durch das der dem abzuschaltenden Teilnehmer zugeordnete Sprachschalter, beispielsweise der Sprachschalter Sp1, nicht weiter abgefragt wird. Dieser Teilnehmer kann dann nicht mehr als aktiver Teilnehmer auftreten. Die Abschaltung kann auch dadurch erfolgen, daß das im Ausgangskreis der entsprechenden Gabelschaltung angeordnete Dämpfungsglied, z.B. D1a, auf einen sehr hohen Dämpfungswert eingestellt wird.

Die Anpassung der Gabelschaltung an die Fernsprechleitung wird jeweils beim Hinzutreten eines neuen Teilnehmers vorgenommen. Das hierfür erforderliche Prüfsignal wird von den anderen Teilnehmern nicht gehört, da es jeweils eigens über einen der Schalter S1.1 bis Sn.1 direkt auf den Eingangszweig der anzupassenden Gabelschaltung gegeben wird. Da diese Anpassung jeweils nur im Bereich der Sprachfrequenzen vorgenommen wird, sind in allen Eingangs- und Ausgangszweigen der Gabelschaltungen Bandpassfilter F1a, F1p usw. angeordnet, um Schwingungen außerhalb dieses Frequenzbereiches zu unterdrücken.

Die Einstellung der Empfindlichkeit der mit den Ausgangszweigen der Gabelschaltungen verbundenen Sprachschalter, beispielsweise Sp1, in Abhängigkeit von der Höhe des ankommenden Sprachsignalpegels, wie oben erläutert, ist von besonderer Bedeutung, weil sonst unter Umständen Schwierigkeiten bei der Umschaltung von einem aktiven Teilnehmer auf den anderen auftreten könnten, beispielsweise wenn in einer der Teilnehmerleitungen starke Hintergrundgeräusche auftreten.

Eine wichtige Möglichkeit der Einrichtung besteht auch darin, daß sie sich ständig selbst auf Funktionsfähigkeit überprüfen kann. So kann beispielsweise jede der Gabelverstärkerschaltungen, die nicht in Betrieb ist, überprüft werden, indem für einen bestimmten Zeitraum der bidirektionale Hauptzweig dieser Gabelschaltung, z.B. G1, über einen ansteuerbaren Schalter 1.4 mit einer vorgegebenen Prüfnachbildung PNB1 abgeschlossen wird und dann das oben beschriebene Anpassungsverfahren durch Abgabe des Prüfsignals, Messung des Prüfsignalpegels und entsprechende Ansteuerung des ansteuerbaren Nachbildungsnetzwerkes NB1 durchgeführt wird. Die gemessenen Werte können mit vorgegebenen Werten verglichen werden und, sobald vorgegebene Differenzen überschritten werden, können von der Überwachungsvorrichtung Ü über die Leitung A1 Alarmsignale abgegeben werden. Dies kann zur Folge haben, daß, sobald ein Defekt auftritt, die defekte Gabelverstärkerschaltung nicht in Betrieb genommen und, sofern es die Anzahl der Teilnehmer gestattet, nur mit den restlichen intakten Gabelverstärkerschaltungen gearbeitet wird. Ein Alarm kann jeweils durch eine Fehleridentifikationsvorrichtung FI angezeigt werden.

## Patentansprüche

1. Einrichtung zur Durchführung von Telefongesprächen zwischen drei und mehr Teilnehmerstellen, bei der jede Teilnehmerstelle über eine Fernsprechleitung (a/b1, a/b2...a/bn) an den bidirektionalen Hauptzweig einer Gabelschaltung (G1, G2...Gn) anschließbar ist, die an ihrer dem Hauptzweig gegenüberliegenden Seite mit einem Nachbildungsnetzwerk (NB1, NB2...NBn) abgeschlossen ist, wobei der Ausgangszweig jeder Gabelschaltung (G1, G2... Gn) über mindestens einen Verstärker (V1a, V2a...Vna) und einen Niederfrequenz-Knoten (P1, P2...Pn) mit den Eingangszweigen der übrigen Gabelschaltungen (G1, G2... Gn), und der Eingangszweig jeder Gabelschaltung (G1, G2...Gn) über mindestens einen Verstärker (V1p, V2p... Vnp) und den Niederfrequenz-Knoten (P1, P2...Pn) mit den Ausgangszweigen der übrigen Gabelschaltungen (G1, G2...Gn) verbunden ist, gekennzeichnet durch folgende Merkmale:
a) Das Nachbildungsnetzwerk (NB1, NB2...NBn) enthält variable ansteuerbare Impedanzen;
b) es sind Vorrichtungen (A, S1.1, S2.1...Sn.1 und St, S1.2, S2.2...Sn2) zur Erzeugung und Zuführung eines Niederfrequenz-Prüfsignals mit konstantem Signalpegel in jeden der Eingangszweige einer Gabelschaltung (G1, G2...Gn) und zur Messung des Signalpegels in jedem der Ausgangszweige einer Gabelschaltung (G1, G2...Gn) vorhanden;
c) es ist eine Steuervorrichtung (St) vorhanden zur optimalen Anpassung jeder der Gabelschaltungen (G1, G2...Gn) an die mit ihr verbundene Fernsprechleitung (a/b1, a/b2...a/bn) aufgrund der fortlaufenden Messung des in Abhängigkeit von der Gabelübergangsdämpfung aus dem Eingangszweig einer Gabelschaltung in den Ausgangszweig übertretenden Anteils des Prüfsignalpegels bei einer Variation der ansteuerbaren Impedanzen des Nachbildungsnetzwerkes (NB1, NB2...NBn) und Steuerung dieser Impedanzen auf einen Wert, der dem kleinsten gemessenen Wert des übergetretenen Anteils des Prüfsignalpegels entspricht sowie zur Bestimmung der maximalen Gabelübergangsdämpfung;
d) es ist eine Steuervorrichtung (St) vorhanden zur Steuerung des Verstärkungsgrades sämtlicher steuerbarer Verstärker (V1a, V2a...Vna bzw. V1p, V2p...Vnp) auf einen vorgegebenen Wert in Abhängigkeit von der jeweils bestimmten Gabelübergangsdämpfung der betreffenden Gabelschaltung sowie der Sprechrichtung und dem Sprachsignalpegel auf der Gabelschaltung.

2. Einrichtung nach Anspruch 1, dadurch gekennzeichnet, daß die Steuervorrichtung (St) derart ausgebildet ist, daß in Verbindung mit einer Sensorschaltung der Verstärkungsgrad bei mindestens einem in einem Ausgangszweig einer Gabelschaltung angeordneten Verstärker (V1a, V2a...Vna) zuerst hochsteuerbar und dann bei Einsetzen einer Rückkopplungsschwingung wieder um einen vorgegebenen kleinen Betrag zurücksteuerbar ist.

3. Einrichtung nach Anspruch 1 oder 2, dadurch gekennzeichnet, daß jeder der Ausgangszweige einer der Gabelschaltungen (G1, G2...Gn) an einen Sprachschalter (Sp1) angeschlossen ist, und jeweils der Verstärker (V1a) in einem Ausgangszweig in Abhängigkeit vom gemessenen Eingangspegel auf den erforderlichen Verstärkungsgrad hochgesteuert wird, bei dem der Sprachschalter (Sp1) dieses Ausgangszweiges anspricht.

4. Einrichtung nach Anspruch 3, dadurch gekennzeichnet, daß die Ansprechempfindlichkeit jedes Sprachschalters (Sp1) in Abhängigkeit von dem in dem mit ihm verbundenen Ausgangszweig einer Gabelschaltung (G1) gemessenen Sprachsignalpegel von der Steuervorrichtung aus derart einstellbar ist, daß die Ansprechempfindlichkeit bei steigendem Sprachsignalpegel abnimmt.

5. Einrichtung nach Anspruch 3 oder 4, dadurch gekennzeichnet, daß jeder Sprachschalter (Sp1) über die vom Sprachschalter zur Steuervorrichtung (St) führende Verbindungsleitung von der Steuervorrichtung aus abfragbar (S1.3) ist.

6. Einrichtung nach einem der Ansprüche 1 bis 5, dadurch gekennzeichnet, daß die Eingangszweige aller Gabelschaltungen (G1, G2...Gn) mit einer Vorrichtung (A) zur Erzeugung einer Ansage und/oder eines Tonsignals verbunden sind und während der Abgabe einer Ansage oder eines Tonsignals alle in den Eingangszweigen angeordneten Verstärker (V1p, V2p...Vnp) auf den gleichen Verstärkungsgrad gesteuert werden.

7. Einrichtung nach einem der Ansprüche 1 bis 8, dadurch gekennzeichnet, daß in jedem Eingangszweig einer Gabelschaltung (G1, G2...Gn) ein zusätzlicher Verstärker (K1) zur Knotenpunktentdämpfung angeordnet ist.

8. Einrichtung nach einem der Ansprüche 1 bis 7, dadurch gekennzeichnet, daß sowohl im Ausgangszweig als auch im Eingangszweig jeder Gabelschaltung (G1, G2...Gn) ein zusätzliches, von der Steuervorrichtung (St) her ansteuerbares Dämpfungsglied (D1p, D1a) angeordnet ist.

9. Einrichtung nach einem der Ansprüche 1 bis 8, dadurch gekennzeichnet, daß die Steuervorrichtung (St) einen Mikrocomputer enthält.

10. Einrichtung nach einem der Ansprüche 1 bis 9, dadurch gekennzeichnet, daß jeder Eingangszweig einer Gabelschaltung (G1, G2...Gn) über einen von der Steuervorrichtung (St) her ansteuerbaren Umschalter (S1.1, S2.1...Sn1) entweder an den Ausgang des steuerbaren Verstärkers (V1p, V2p...Vnp) oder an die Vorrichtung (A) zur Abgabe des Prüfsignals anschließbar ist.

11. Einrichtung nach einem der Ansprüche 1 bis 10, dadurch gekennzeichnet, daß jeder Ausgangszweig einer Gabelschaltung (G1, G2...Gn) vor dem Eingang des steuerbaren Verstärkers (V1a, V2a...Vna) über einen von der Steuervorrichtung (St) her ansteuerbaren Schalter (S1.2, S2.2...Sn2) an die Vorrichtung (St) zur Pegelmessung anschließbar ist.

12. Einrichtung nach einem der Ansprüche 1 bis 11, gekennzeichnet durch eine Überwachungsvorrichtung (Ü) zur Meldung von Störungen in der Einrichtung.

13. Verfahren zur Durchführung von Telefongesprächen zwischen drei und mehr Teilnehmerstellen mittels einer Einrichtung nach einem der Ansprüche 1 bis 12, bei dem die erste und jede folgende, die Einrichtung anwählende Teilnehmerstelle mit dem bidirektionalen Zweig einer der Gabelschaltungen (G1, G2...Gn) verbunden wird, gekennzeichnet durch folgende Verfahrensschritte:
a) Anpassung jeder mit einer Teilnehmerstelle verbundenen Gabelschaltung (G1, G2...Gn) an die Fernsprechleitung (a/b1, a/b2...a/bn) durch Abgabe des Niederfrequenz-Prüfsignals in den Eingangszweig der Gabelschaltung und mehrfache Messung des in den Ausgangszweig dieser Gabelschaltung in Abhängigkeit von der Gabelübergangsdämpfung übertretenden Anteils des Prüfsignalpegels, wobei vor jeder Messung die variable Impedanz des Nachbildungsnetzwerkes (NB1, NB2... NBn) in vorgegebener Weise auf einen anderen Wert eingestellt wird, und die erhaltenen Meßwerte des übertretenden Anteils des Prüfsignalpegels miteinander verglichen und den entsprechenden Impedanzwerten zugeordnet werden und nach einer vorgegebenen Anzahl von Messungen das Nachbildungsnetzwerk (NB1, NB2...NBn) auf einen Impedanzwert fest eingestellt wird, der dem kleinsten gemessenen Wert des übergetretenen Anteils des Prüfsignalpegels entspricht sowie Bestimmung der Gabelübergangsdämpfung sämtlicher angepaßter Gabelschaltungen (G1, G2...Gn);
b) Einschaltung mindestens der in den Eingangszweigen der Gabelschaltungen (G1, G2...Gn) angeordneten Verstärker (V1p, V2p...Vnp) und Abgabe eines Ansagesignals in diese Eingangszweige;
c) wiederholte Bestimmung der Sprachsignalpegel in den Ausgangszweigen der mit Teilnehmerstellen verbundenen Gabelschaltungen (G1, G2...Gn), Festlegung der zum jeweiligen Zeitpunkt aktiven Teilnehmerstelle und Einstellung der Verstärkungsgrade an den Verstärkern in den Ausgangs- und Eingangszweigen der Gabelschaltungen (G1, G2... Gn) in Abhängigkeit von der Sprechrichtung, dem Sprachsignalpegel und der Gabelübergangsdämpfung in jeder Gabelschaltung.

14. Verfahren nach Anspruch 13 zur Durchführung von Telefongesprächen, wobei die nicht mit einer Teilnehmerstelle verbundenen Gabelschaltungen (G1, G2...Gn) einer Selbstüberprüfung unterzogen werden, dadurch gekennzeichnet, daß jeweils der bidirektionale Zweig einer nicht mit einer Teilnehmerstelle verbundenen Gabelschaltung mit einer vorgegebenen Impedanz abgeschlossen wird und dann die Anpassung dieser Gabelschaltung von der Steuervorrichtung (St) aus durchgeführt wird durch Abgabe des Niederfrequenz-Prüfsignals in den Eingangszweig dieser Gabelschaltung und mehrfache Messung des in den Ausgangszweig dieser Gabelschaltung in Abhängigkeit von der Gabelübergangsdämpfung übertretenden Anteils des Prüfsignalpegels, wobei vor jeder Messung die variable Impedanz des Nachbildungsnetzwerkes in vorgegebener Weise auf einen anderen Wert eingestellt wird und die erhaltenen Meßwerte des übertretenden Anteils des Prüfsignalpegels miteinander verglichen und den entsprechenden Impedanzwerte zugeordnet werden und nach einer vorgegebenen Anzahl von Messungen das Nachbildungsnetzwerk auf einen Impedanzwert fest eingestellt wird, der dem kleinsten gemessenen Wert des übergetretenen Anteils des Prüfsignalpegels entspricht sowie Bestimmung der Gabelübergangsdämpfung dieser Gabelschaltung und Vergleich der erhaltenen Werte mit vorgegebenen Werten, wobei bei Überschreiten einer vorgegebenen Differenz zwischen den vorgegebenen und den gemessenen Werten ein Steuer-und/ oder Alarmsignal ausgelöst wird.

## Claims

1. Device for conducting telephone conversations between three or more subscriber points, in which each subscriber point can be connected via a telephone line (a/b1, a/b2...a/bn) to the bidirectional main branch of a hybrid network (G1, G2...Gn) which is terminated, on its side opposite the main branch, by a line balancing network (NB1, NB2...NBn), the output branch of each hybrid network (G1, G2...Gn) being connected via at least one amplifier (V1a, V2a...Vna) and an audio-frequency node (P1, P2...Pn) to the input branches of the other hybrid networks (G1, G2...Gn), and the input branch of each hybrid network (G1, G2...Gn) being connected via at least one amplifier (V1p, V2p...Vnp) and the audio-frequency node (P1, P2...Pn) to the output branches of the other hybrid networks (G1, G2...Gn), characterised by the following features:
a) the line balancing network (NB1, NB2...NBn) contains variable, controllable impedances;
b) devices (A, S1.1, S2.1...Sn.1 and St, S1.2, S2.2...Sn2) are present for generating and feeding an audio-frequency test signal at a constant signal level into each of the input branches of a hybrid network (G1, G2...Gn) and for measuring the signal level in each of the output branches of a hybrid network (G1, G2...Gn);
c) a control device (St) is present for optimum matching of each of the hybrid networks (G1, G2...Gn) to the telephone line (a/b1, a/b2...a/bn) connected to it, using the continuous measurement of the proportion of the test signal level which is transferred as a function of the hybrid transfer attenuation from the input branch of a hybrid network into the output branch, during a variation in the controllable impedances of the line balancing network (NB1, NB2 ... NBn), and controlling these impedances to a value which corresponds to the smallest measured value of the transferred proportion of the test signal level, and for determining the maximum hybrid transfer attenuation;
d) a control device (St) is present for controlling the gain level of all the controllable amplifiers (V1a, V2a...Vna and V1p, V2p...Vnp) to a predetermined value as a function of the respectively determined hybrid transfer attenuation of the relevant hybrid network as well as of the traffic direction and of the voice signal level on the hybrid network.

2. Device according to Claim 1, characterised in that the control device (St) is constructed in such a manner that, in conjunction with a sensor circuit, the gain level of at least one amplifier (V1a, V2a...Vna) arranged in an output branch of a hybrid network can initially be raised and then can be lowered again by a predetermined small amount when feedback oscillation starts.

3. Device according to Claim 1 or 2, characterised in that each of the output branches of one of the hybrid networks (G1, G2...Gn) is connected to a voice-operated switch (Sp1) and the amplifier (V1a) in each case in an output branch is raised to the required gain level, as a function of the measured input level at which the voice-operated switch (Sp1) in this output branch triggers.

4. Device according to Claim 3, characterised in that the triggering sensitivity of each voice-operated switch (Sp1) can be set by the control device, as a function of the voice signal level measured in the output branch of a hybrid network (G1) connected to it, in such a manner that the triggering sensitivity reduces as the voice signal level rises.

5. Device according to Claim 3 or 4, characterised in that each voice-operated switch (Sp1) can be interrogated (S1.3) by the control device via the connecting line leading from the voice-operated switch to the control device (St).

6. Device according to one of Claims 1 to 5, characterised in that the input branches of all the hybrid networks (G1, G2...Gn) are connected to a device (A) for generating an announcement and/or a tone signal and, during the emission of an announcement or a tone signal, all the amplifiers (V1p, V2p...Vnp) arranged in the input branches are set to the same gain level.

7. Device according to one of Claims 1 to 6, characterised in that an additional amplifier (K1) for node loss reduction is arranged in each input branch of a hybrid network (G1, G2...Gn).

8. Device according to one of Claims 1 to 7, characterised in that an additional attenuator (D1p, D1a), which can be controlled by the control device (St), is arranged both in the output branch and in the input branch of each hybrid network (G1, G2...Gn).

9. Device according to one of Claims 1 to 8, characterised in that the control device (St) contains a microcomputer.

10. Device according to one of Claims 1 to 9, characterised in that each input branch of a hybrid network (G1, G2...Gn) can be connected via a changeover switch (S1.1, S2.1...Sn1), which can be driven by the control device (St), either to the output of the controllable amplifier (V1p, V2p...Vnp) or to the device (A) for emitting the test signal.

11. Device according to one of Claims 1 to 10, characterised in that each output branch of a hybrid network (G1, G2...Gn) can be connected, upstream of the input of the controllable amplifier (V1a, V2a...Vna), via a switch (S1.2, S2.2...Sn2) which can be driven by the control device (St), to the device (St) for level measurement.

12. Device according to one of Claims 1 to 11, characterised by a monitoring device (Ü) for reporting disturbances in the device.

13. Method for conducting telephone conversations between three or more subscriber points by means of a device according to one of Claims 1 to 12, in which the first and each subsequent subscriber point selecting the device is connected to the bidirectional branch of one of the hybrid networks (G1, G2...Gn), characterised by the following method steps:
a) matching of each hybrid network (G1, G2...Gn) which is connected to a subscriber point to the telephone line (a/b1, a/b2...a/bn) by emission of the audio-frequency test signal into the input branch of the hybrid network and multiple measurement of the proportion of the test signal level which is transferred into the output branch of this hybrid network as a function of the hybrid transfer attenuation, the variable impedance of the line balancing network (NB1, NB2...NBn) being set to a different value, in a known manner, before each measurement, and the measured values of the transferred proportion of the test signal level obtained being compared with one another and being allocated to the corresponding impedance values and, after a predetermined number of measurements, the line balancing network (NB1, NB2...NBn) being fixedly set to an impedance value which corresponds to the smallest measured value of the transferred proportion of the test signal level and to the determination of the hybrid transfer attenuation of all the matched hybrid networks (G1, G2...Gn);
b) switching on at least the amplifiers (V1p, V2p...Vnp) arranged in the input branches of the hybrid networks (G1, G2...Gn) and emitting an announcement signal into these input branches;
c) repeatedly determining the voice signal level in the output branches of the hybrid networks (G1, G2...Gn) connected to subscriber points, defining the subscriber point which is active at the respective time and setting the gain levels of the amplifiers in the input and output branches of the hybrid networks (G1, G2...Gn) as a function of the traffic direction, the voice signal level and the hybrid transfer attenuation in each hybrid network.

14. Method according to Claim 13 for conducting telephone conversations, the hybrid networks (G1, G2...Gn) which are not connected to a subscriber point being subjected to a self-check, characterised in that the bidirectional branch of a hybrid network which is not connected to a subscriber point is in each case terminated by a predetermined impedance, and the matching of this hybrid network is then carried out by the control device (St) by emitting the audio-frequency test signal into the input branch of this hybrid network and multiple measurement of the proportion of the test signal level which is transferred into the output branch of this hybrid network as a function of the hybrid transfer attenuation, the variable impedance of the line balancing network being set to a different value, in a known manner, before each measurement, and the measured values of the transferred proportion of the test signal level obtained being compared with one another and being allocated to the corresponding impedance values and, after a predetermined number of measurements, the line balancing network being fixedly set to an impedance value which corresponds to the smallest measured value of the transferred proportion of the test signal level and to the determination of the hybrid transfer attenuation of this hybrid network and comparison of the values obtained with predetermined values, a control and/or alarm signal being triggered if a predetermined difference between the predetermined and measured values is exceeded.

## Revendications

1. Dispositif pour réaliser des conversations téléphoniques entre deux et plusieurs postes d'abonnés, dans lequel chaque poste d'abonné peut être raccordé par un conducteur téléphonique (a/b1, a/b2....a/bn) à la branche principale bidirectionnelle d'un termineur (G1, G2...Gn) qui est raccordé de son côté opposé à la branche principale à un réseau de simulation (NB1, NB2... NBn) tandis que la branche de sortie de chaque termineur (G1, G2...Gn) est connectée par au moins un amplificateur (V1a, V2a...Vna) et un point nodal à basse fréquence (P1, P2...Pn) avec les branches d'entrée des autres termineurs (G1, G2...Gn) et dans lequel la branche d'entrée de chaque termineur (G1, G2...Gn) est connectée par au moins un amplificateur (V1p, V2p...Vnp) et les points nodaux à basse fréquence (P1, P2...Pn) avec les branches de sortie des autres termineurs (G1, G2...Gn), caractérisé en ce que :
a) le réseau de simulation (NB1, NB2...NBn) contient des impédances variables et réglables;
b) il existe des dispositifs (A, S1.1, S2.1...Sn.1 et St, S1.2, S2.2...Sn2) pour produire et envoyer un signal de contrôle à basse fréquence avec niveau de signal constant à chacune des branches d'entrée d'un termineur (G1, G2...Gn) et pour mesurer le niveau de signal dans chacune des branches de sortie de chaque termineur (G1, G2...Gn);
c) il existe un dispositif de commande (St) pour adapter de manière optimale chacun des termineurs (G1, G2...Gn) au conducteur téléphonique (a/b1,a/b2... a/bn) qui y est connecté sur base d'une mesure continue de la fraction du niveau de signal de contrôle transmise dans la branche de sortie en fonction de l'amortissement de passage depuis la branche de sortie d'un termineur pour une variation des impédances réglables du réseau de simulation (NB1, NB2...NBn) et de la commande de ces impédances à une valeur correspondant à la plus petite valeur mesurée de la fraction transmise du niveau de signal de contrôle, ainsi que pour déterminer l'amortissement de transmission maximal;
d) il existe un dispositif de commande (St) pour commander le degré d'amplification de tous les amplificateurs réglables (V1a, V2a...Vna et V1p, V2p...Vnp) à une valeur prédéterminée, en fonction de l'amortissement de passage déterminé du termineur concerné ainsi que de la direction de parole et du niveau de signal de parole sur le termineur.

2. Dispositif selon la revendication 1, caractérisé en ce que le dispositif de commande (St) est conçu de façon que, en liaison avec un circuit de détecteur, le degré d'amplification pour au moins l'un des amplificateurs (V1a, V2a...Vna) disposés dans une branche de sortie d'un termineur puisse être tout d'abord augmenté et que, ensuite, lorsque apparaissent des oscillations de réaction, ce degré puisse être diminué à nouveau d'une faible valeur prédéterminée.

3. Dispositif selon la revendication 1 ou 2, caractérisé en ce que chacune des branches de sortie de l'un des termineurs (G1, G2...Gn) est raccordée à un commutateur de parole (Sp1) et que l'amplificateur (V1a) une branche de sortie est réglé en fonction du niveau d'entrée mesuré à un niveau plus élevé requis pour lequel le commutateur de parole (Sp1) de cette branche de sortie réagit.

4. Dispositif selon la revendication 3, caractérisé en ce que la sensibilité de réaction de chaque commutateur de parole (Sp1) peut être réglée en fonction du niveau de signal de parole mesuré dans la branche de sortie d'un termineur (G1)raccordée à celui-ci par le dispositif de commande, de façon que la sensibilité de réaction diminue lorsque le niveau de signal de parole augmente.

5. Dispositif selon la revendication 3 ou 4, caractérisé en ce que chaque commutateur de parole (Sp1) peut être interrogé par le dispositif de commande en passant par le conducteur de liaison menant au dispositif de commande (St) depuis le commutateur de parole.

6. Dispositif selon l'une des revendications 1 à 5, caractérisé en ce que les branches d'entrée de tous les termineurs (G1, G2...Gn) sont connectées à un dispositif (A) pour produire une annonce et/ou un signal de tonalité et que, pendant l'émission d'une annonce ou d'un signal de tonalité, tous les amplificateurs (V1p, V2p...Vnp) disposés dans les branches d'entrée sont réglés au même degré d'amplification.

7. Dispositif selon l'une des revendications 1 à 6, caractérisé en ce qu'un amplificateur supplémentaire (K1) pour une réduction de l'amortissement des points nodaux est disposé dans chaque branche d'entrée d'un termineur (G1, G2...Gn).

8. Dispositif selon l'une des revendications 1 à 7, caractérisé en ce que, tant dans la branche de sortie que dans la branche d'entrée de chaque termineur (G1, G2...Gn), un élément d'amortissement (D1p, D1a) supplémentaire est disposé et peut être commandé par le dispositif de commande (St).

9. Dispositif selon l'une des revendications 1 à 8, caractérisé en ce que le dispositif de commande (St) comporte un micro-ordinateur.

10. Dispositif selon l'une des revendications 1 à 9, caractérisé en ce que chaque branche d'entrée d'un termineur (G1, G2...Gn) peut être raccordée par l'intermédiaire d'un commutateur (S1.1, S2.1...Sn1) pouvant être commandé par le dispositif de commande (St), soit à la sortie de l'amplificateur réglable (V1p, V2p...Vnp), soit au dispositif (A) destiné à émettre le signal de contrôle.

11. Dispositif selon l'une des revendications 1 à 10, caractérisé en ce que chaque branche de sortie d'un termineur (G1, G2...Gn) peut être raccordée avant l'entrée de l'amplificateur réglable (V1a, V2a...Vna) et par un commutateur (S1.2, S2.2...Sn2) réglable par le dispositif de commande (St) au dispositif (St) pour mesurer le niveau.

12. Dispositif selon l'une des revendications 1 à 11, caractérisé par un dispositif de surveillance (U) pour signaler les défauts dans le dispositif.

13. Procédé de réalisation de conversations téléphoniques entre deux et plusieurs postes d'abonnés au moyen d'un dispositif selon l'une des revendications 1 à 12, dans lequel le premier poste d'abonné et chacun des postes suivants choisissant le dispositif sont connectés à la branche bidirectionnelle de l'un des termineurs (G1, G2...Gn), caractérisé par les phases opératoires suivantes :
a) adaptation de chacun des termineurs (G1, G2...Gn) reliés à un poste d'abonné au conducteur téléphonique (a/b1, a/b2...a/bn) en émettant le signal de contrôle à basse fréquence dans la branche d'entrée du termineur et en mesurant plusieurs fois la fraction du niveau de signal de contrôle transmise dans la branche de sortie de ce termineur, en fonction de l'amortissement de passage tandis que, avant chaque mesure, l'impédance variable du réseau de simulation (NB1, NB2...NBn) est réglée d'une manière prédéterminée à une autre valeur et que les valeurs de mesure obtenues de la fraction transmise du niveau de signal de contrôle sont comparées entre elles et attribuées aux valeurs d'impédance correspondantes et que, après un nombre prédéterminé de mesures, le réseau de simulation (NB1, NB2...NBn) est réglé de manière fixe à une valeur d'impédance qui correspond à la plus petite valeur mesurée de la fraction transmise du niveau de signal de contrôle, ainsi que la détermination de l'amortissement de passage de tous les termineurs adaptés (G2 1, G2...Gn);
b) enclenchement d'au moins les amplificateurs (V1p, V2p...Vnp) disposés dans les branches d'entrée des termineurs (G1, G2...Gn) et émission d'un signal d'annonce dans cette branche d'entrée;
c) détermination répétée du niveau de signal de parole dans les branches de sortie des termineurs (G1, G2...Gn) reliées aux postes d'abonnés, identification du poste d'abonné actif à chaque moment et réglage des degrés d'amplification des amplificateurs dans les branches de sortie et d'entrée des termineurs (G1, G2... Gn) en fonction de la direction de parole, du niveau de signal de parole et de l'amortissement de passage dans chacun des termineurs.

14. Procédé selon la revendication 13 pour réaliser des conversations téléphoniques, dans lequel les termineurs (G1, G2...Gn) non reliés à un poste d'abonné sont soumis à un auto-contrôle, caractérisé en ce que la branche bidirectionnelle d'un termineur non relié à un poste d'abonné est chaque fois raccordée à une impédance prédéterminée et que l'adaptation de ce termineur est alors effectuée par le dispositif de commande (St), par transmission du signal de contrôle à basse fréquence dans la branche d'entrée de ce termineur et mesure répétée de la fraction du niveau de signal de contrôle transmise dans la branche de sortie de ce termineur en fonction de l'amortissement de passage tandis que, avant chaque mesure, l'impédance variable du réseau de simulation est réglée d'une manière prédéterminée sur une autre valeur et que les valeurs de mesure ainsi obtenues de la fraction transmise du niveau du signal de contrôle sont comparées entre elles et sont rapportées aux valeurs d'impédance correspondantes et que, après un nombre prédéterminé de mesures, le réseau de simulation est réglé de manière fixe sur une valeur d'impédance qui correspond à la plus petite valeur mesurée de la fraction transmise du niveau de signal de contrôle, ainsi que détermination de l'amortissement de passage de ce termineur et comparaison des valeurs obtenues avec les valeurs prédéterminées tandis que, en cas de dépassement d'une différence prédéterminée entre les valeurs prédéterminées et les valeurs mesurées, un signal de commande et/ou un signal d'alarme est émis.
